# EUROPEAN PATENT SPECIFICATION

(11) **EP 2 521 251 B1**
(45) Date of publication and mention of the grant of the patent: **04.10.2017**
(21) Application number: 10840729.7
(22) Date of filing: 24.11.2010
(51) Int. Cl.: H02K 49/10, H02K 49/04

(54) **EDDY CURRENT TYPE REDUCTION GEAR**
GETRIEBE MIT EDDY-STROM-UNTERDRÜCKUNG
ENGRENAGE DE RÉDUCTION DE TYPE À COURANT DE FOUCAULT

(30) Priority: 28.12.2009 JP 2009297514
(43) Date of publication of application: 07.11.2012
(73) Proprietor: Nippon Steel & Sumitomo Metal Corporation, Tokyo 100-8071 (JP); NTN Corporation, Osaka-shi, Osaka 550-0003 (JP)
(72) Inventor: SAITO, Akira, Chiyoda-ku, Tokyo 100-8071 (JP); TASAKA, Masahiro, Chiyoda-ku, Tokyo 100-8071 (JP); NOGUCHI, Yasutaka, Chiyoda-ku, Tokyo 100-8071 (JP); IMANISHI, Kenji, Chiyoda-ku, Tokyo 100-8071 (JP); YAMASAKI, Tatsuya, Iwata-shi Shizuoka 438-8510 (JP); MAKINO, Tomoaki, Iwata-shi Shizuoka 438-8510 (JP)
(74) Representative: Zimmermann & Partner Patentanwälte mbB
(86) International application number: PCT/JP2010/006843
(87) International publication number: WO 2011/080869

(56) References cited:
- EP-A1- 1 912 313
- JP-A- 4 331 456
- JP-A- 2006 340 428
- JP-A- 2007 037 305
- JP-A- 2008 039 169
- JP-A- 2008 039 169
- JP-U- H0 580 178
- JP-U- H0 580 178

## Description

### [TECHNICAL FIELD]

The present invention relates to an eddy current speed reducer using permanent magnets, and specifically relates to an eddy current speed reducer suited to a small- to mid-size bus, truck or the like not which is not especially equipped with a compressed air tank or the like.

### [BACKGROUND ART]

In large vehicles such as trucks and buses, in addition to foot brakes (friction brakes), which are the main brakes, engine braking and exhaust braking are used as auxiliary brakes. In recent years, a reduction of an amount of exhaust in vehicle engines has been promoted and resulted in decreasing the ability of engine braking and exhaust braking has decreased; therefore, an eddy current speed reducer (hereinafter referred to simply as "speed reducer") is often installed to augment auxiliary braking.

Speed reducers are generally classified into systems using electromagnets and systems using permanent magnets to cause a magnetic field for producing a braking force to be generated; however, those of a permanent magnet type without requiring energizing for braking have recently become mainstream.

For example, a general configuration of a speed reducer of a permanent magnet system installed in a large-size vehicle is disclosed in Patent Literature 1. The speed reducer disclosed in the same literature is configured such that a rotor of drum shape is fixed as a braking member to a rotation shaft such as a propeller shaft, a ring member to which a plurality of permanent magnets are installed circumferentially is disposed inside this rotor, and switching between braking and non-braking is performed by causing the ring member to move to a predetermined position.

Usually, in a large-size vehicle, a compressed air tank that stores compressed air is equipped since compressed air is used as a source of power to drive various devices. As a result, for the speed reducer installed in large-size vehicles, a pneumatic actuator that uses compressed air from the compressed air tank as a source of power is adopted as the driving device to cause the ring member retaining the permanent magnets to move in order to switch between braking and non-braking.

However, augmenting the capability of the auxiliary braking has been demanded not only for large-size vehicles, but also for small- to mid-size trucks, buses and the like, and thus the demand for installing a speed reducer of a permanent magnet system that is smaller and lighter than conventional ones has been growing.

However, these small- to mid-size vehicles often are not equipped with a compressed air tank. As a result, compressed air cannot be used as the source of power to cause the ring member to move when switching between braking and non-braking, and thus a pneumatic actuator cannot be adopted in the speed reducer installed in small- to mid-size vehicles.

In addition to this, with the speed reducer disclosed in Patent Literature 1, since the stroke of the actuator causing the ring member to move between a braking position and a non-braking position is large, and the required force therefor also is high, the size of the actuator inevitably becomes large, and it is difficult to realize the reduction in the size of the speed reducer required for installation in a small- to mid-size vehicle.

As a technology dealing with these problems, for example, speed reducers that perform switching between braking and non-braking without causing a ring member, to which permanent magnets are installed circumferentially, to move are proposed in Patent Literature 2 and 3. The speed reducers proposed in the same literatures have configurations in which a drum-shaped rotor is fixed as a braking member to a rotation shaft, a support ring, to which a plurality of permanent magnets are adhered to the outer circumferential surface, is rotatably supported by the rotation shaft via bearings at the interior of this rotor, and further, a brake disk is mounted to the support ring and a switch brake is provided to this brake disk.

According to the speed reducers proposed in Patent Literature 2 and 3, a state of non-braking is when the switch brake is not in operation, wherein in association with the rotation of the rotor along with the rotation shaft, the support ring rotates synchronously integrally with the rotor by way of the magnetic attraction action between the permanent magnets and the rotor, with a result of the braking force being not generated.

On the other hand, during braking, brake pads are pressed against the brake disk rotating integrally with the support ring, and the rotation of the support ring is made to stop by causing the actuator, which configures the switch brake, to operate. Thus, eddy current generates at the inner circumferential surface of the rotating rotor by the action of the magnetic field from the permanent magnets of the halted support ring, whereby a braking force generates at the rotor.

With the speed reducers proposed in Patent Literature 2 and 3, since a disk brake is adopted in the switch brake to switch between braking and non-braking, the stroke of the actuator can be reduced and a reduction in the size of the speed reducer can be expected.

However, there is a growing demand for performance enabling output of torque to be higher than the braking force generated by eddy current, and enabling the rotation of the support ring to be stopped quickly. With the speed reducers proposed in Patent Literature 2 and 3, a hydraulic actuator with oil or compressed air as the source of power is adopted as the actuator, which configures the switch brake, in order to meet this demand.

As a result, the speed reducers proposed in Patent Literature 2 and 3 require a compressed air tank in using compressed air as the source of power of the switch brake, and require a hydraulic system and a piping system in using oil, and thus it is difficult to install the speed reducers in a small- to mid-size vehicle which is not specially equipped with these.

### [CITATION LIST]

### [PATENT LITERATURE]

[PATENT LITERATURE 1] Japanese Patent Application Publication No. H4-12659
[PATENT LITERATURE 2] Japanese Patent Application Publication No. H4-331456
[PATENT LITERATURE 3] Japanese Utility Model Application Publication No. H5-80178

### [SUMMARY OF INVENTION]

### [TECHNICAL PROBLEM]

The present invention has been made taking the above-mentioned problems into account, and has an object of providing an eddy current speed reducer that can realize a reduction in size, and is able to be installed even in a small- to medium-sized bus, truck or the like not especially equipped with a compressed air tank or the like.

### [SOLUTION TO PROBLEM]

As a result of conducting a thorough investigation to achieve the above-mentioned objects, the present inventors has found that adopting a brake disk using an electric linear actuator as the switch brake to switch between braking and non-braking, and further adopting an actuator comprising a planetary roller mechanism as the electric linear actuator is effective to achieve both realizing a reduction in size as well as installing in small- to mid-size vehicles which are not especially equipped with a compressed air tank or the like, thereby completing the present invention.

An eddy current speed reducer of the present invention in which included are: a brake disk that is fixed to a rotation shaft of a vehicle; permanent magnets that are disposed not only oppositely relative to a principal surface of the brake disk but also circumferentially in such a manner that each magnet is magnetized in reverse polarity to adjacent ones; a rotational member that retains the permanent magnets, has a switch brake disk, and is rotatably supported by the rotation shaft; a switch brake caliper that has brake pads sandwiching the switch brake disk therebetween, and is fixed to an irrotational portion of the vehicle; and an electric linear actuator that causes the brake pads to be linearly driven by converting rotational motion of the electric motor into linear motion, is characterized in that: the electric linear actuator is configured such that: a plurality of planetary rollers are interposed between an outer circumferential surface of a rotor shaft, which rotates integrally with a main shaft of the electric motor, and an inner circumferential surface of an outer race member that concentrically surrounds the rotor shaft, and each of the planetary rollers revolves while rotating around the rotor shaft as a result of the rotation of the rotor shaft; while allowing a spiral convex zone to be disposed on the inner circumferential surface of the outer race member, provided on an outer circumferential surface of each of the planetary rollers is a circumferential groove system, which has the same pitch as the spiral convex zone and meshes with the spiral convex zone, or a spiral groove system, which has the same pitch as the spiral convex zone and a lead angle different from that of the spiral convex zone and meshes with the spiral convex zone,; whereby the outer race member moves in an axial direction in response to revolving and orbital motion of each of the planetary rollers as a result of the rotation of the rotor shaft to cause the brake pads to be linearly driven as a result of the movement in the axial direction of the outer race member.

In the above speed reducer, it is preferable that the switch brake caliper is fixed to the irrotational portion of the vehicle via a buffering material.

### [ADVANTAGEOUS EFFECTS OF INVENTION]

According to the eddy current speed reducer of the present invention, the length of the stroke of the actuator used to cause the disk brake to be driven can be decreased because of adopting a disk brake for the switch brake that switches between braking and non-braking, and thus makes it possible to realize a size reduction in the speed reducer. Furthermore, the speed reducer of the present invention can be easily installed even in a small- to medium-sized vehicle which is not especially equipped with a compressed air tank or the like because of using an electric linear actuator which is operable electrically to switch between braking and non-braking.

### [BRIEF DESCRIPTION OF DRAWINGS]

FIG. 1 is a longitudinal sectional view showing a configuration example of an eddy current speed reducer of the present invention;
FIG. 2 is a view showing a configuration example of an electric linear actuator in the eddy current speed reducer of the present invention, with FIG. 2(a) showing a longitudinal sectional view and FIG. 2(b) showing a cross-sectional view along A-A of FIG. 2(a), respectively;
FIG. 3 is a schematic diagram showing one example of a mitigation measure in the structure against a shock generated by the switch brake;
FIG. 4 is a schematic diagram showing another example of a mitigation measure in the structure against a shock generated by the switch brake;
FIG. 5 is a schematic diagram showing yet another example of a mitigation measure in the structure against a shock generated by the switch brake;
FIG. 6 is a time chart illustrating an example of a mitigation measure in control against a shock generated by the switch brake in case the actuator has a thrust holding function;
FIG. 7 is a schematic diagram showing a relationship between torque and the difference in rotational speed between a brake disk and a rotational member, in order to ascertain the suitable pressing force of the actuator; and
FIG. 8 is a time chart illustrating an example of a mitigation measure in control against a shock generated by the switch brake in case the actuator does not have a thrust holding function.

### [DESCRIPTION OF EMBODIMENTS]

Hereinafter, an embodiment of an eddy current speed reducer of the present invention will be explained in detail.

### 1. Basic Configuration of Eddy Current Speed Reducer

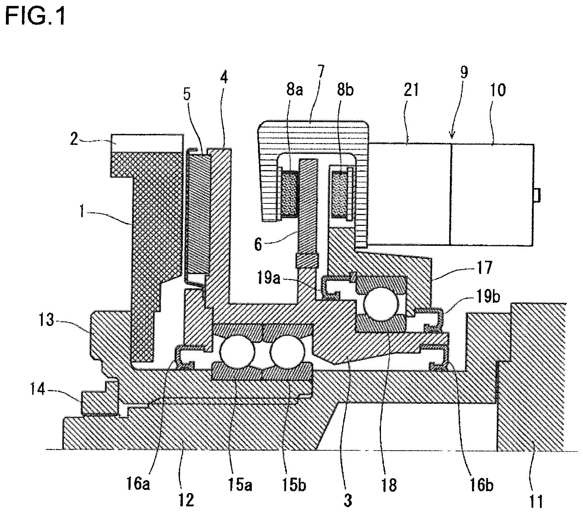

FIG. 1 is longitudinal sectional view showing a configuration example of the eddy current speed reducer of the present invention. The eddy current speed reducer of the present invention is of permanent magnet type, and includes a brake disk 1, a rotational member 3 that retains permanent magnets 5 and has a switch brake disk 6, a switch brake caliper 7 having brake pads 8a, 8b that sandwich the switch brake disk 6 therebetween, and an electric linear actuator 9 that drives the switch brake caliper 7, as shown in the same figure.

The brake disk 1 is in the form of a rotor serving as a braking member, and is configured so as to rotate integrally with a rotation shaft 11 such as a propeller shaft. More specifically, a connecting shaft 12 is fixed by bolts or the like coaxially with the rotational shaft 11, and a sleeve 13 with a flange is inserted while engaging by splines to the connecting shaft 12 and is fixed by a nut 14. The brake disk 1 is fixed by bolts or the like to the flange of the sleeve 13 thus integrated with the rotational shaft 11, and is thereby made so as to rotate integrally with the rotational shaft 11.

Radiator fins 2 are provided at the outer circumference of the brake disk 1. These radiator fins 2 are integrally formed with the brake disk 1. A ferromagnetic material such as iron or a weakly magnetic material such as ferritic stainless steel can be used for the brake disk 1.

The rotational member 3 serves as a stator for causing a braking force to be generated at the brake disk 1, which serves as a rotor, and is configured to be rotatable relative to the rotation shaft 11. More specifically, the rotational member 3 is a ring-shaped member as being concentric with the connecting shaft 12, and is supported by the sleeve 13, which is integrated with the rotation shaft 11, via bearings 15a, 15b, thereby allowing free rotation relative to the rotation shaft 11 possible. Lubricating grease is filled into the bearings 15a, 15b, and this lubricating grease is prevented from leaking out by seal members 16a, 16b of ring shape installed at both front and back ends of the rotational member 3.

The rotational member 3 has a magnet support disk 4 that retains the permanent magnets 5 in facing relation relative to the principal surface of the brake disk 1. This magnet support disk 4 may be integrally formed with the rotational member 3, or may be formed separately and fixed to the rotational member 3 by bolts or the like. A plurality of permanent magnets 5, which are disposed circumferentially, are fixed to the magnet support disk 4 at a surface opposite the principal surface of the brake disk 1. The permanent magnets 5 are disposed so that the polarities of adjacent magnets alternately differ (N pole, S pole).

Furthermore, the rotational member 3 has a switch brake disk 6 behind the magnet support disk 4. The switch brake disk 6 is mounted to rotational member 3 by bolts or the like to be integrated with the rotational member 3.

The switch brake caliper 7 has a pair of brake pads 8a, 8b disposed at the front and back, and is extendedly mounted to a bracket 17 by way of bolts or the like equipped with springs, in a state in which the switch brake disk 6 is disposed between the brake pads 8a, 8b with a predetermined gap therebetween. This bracket 17 is mounted to an irrotational portion of the vehicle such as the chassis or cross member as described in detail later.

In addition, the bracket 17 shown in FIG. 1 encircles the rotational member 3 behind the switch brake disk 6, and is rotatably supported by the rotational member 3 via a bearing 18. Lubricating grease is also loaded into this bearing 18, and this lubricating grease is prevented from leaking out by way of seal members 19a, 19b of ring shape installed at both front and back ends of the bracket 17.

The electric linear actuator 9 is fixed by bolts or the like to the switch brake caliper 7. The electric linear actuator 9 uses electrical current supplied to an electric motor 10 as a source of power, and converts the rotational motion of the electric motor 10 into linear motion to cause the brake pad 8b on the back side to be linearly driven toward the switch brake disk 6. The brake pad 8b on the back side thereby presses the switch brake disk 6, and by action of the counterforce incurred by the pressing, the brake pad 8a on the front side moves toward the switch brake disk 6, with a result that the switch brake disk 6 can be powerfully sandwiched by the brake pads 8a, 8b on the front and back sides thereof.

According to the speed reducer of such a configuration, a state of non-braking time is when the electric motor 10 is not energized and the electric linear actuator 9 is not made to operate. At this time, the rotational member 3 rotates integrally synchronously with the brake disk 1 by way of the magnetic attraction action between the permanent magnets 5 retained by the magnet support disk 4 integral with the rotational member 3 and the brake disk 1, accompanying the rotation of the brake disk 1 as being integrated with the rotation shaft 11. At this time, a braking force is not generated since a difference in the relative rotational speed does not occur between the brake disk 1 as a rotor, and the permanent magnets 5 of the rotational member 3 as a stator.

On the other hand, during braking, the electric motor 10 is energized to cause the electric linear actuator 9 to operate. The switch brake disk 6 rotating as being integrated with the rotational member 3 is thereby sandwiched by the brake pads 8a, 8b, and the rotation of the rotational member 3 can be quickly made to stop. If only the rotational member 3 stops when the brake disk 1 is rotating, a difference in the relative rotational speed will occur between the brake disk 1 as a rotor, and the permanent magnets 5 of the rotational member 3 as a stator, eddy current is generated at the principal surface of the brake disk 1 by action of the magnetic field from the permanent magnets 5, and a braking force on the rotational shaft 11 can be generated via the brake disk 1.

In this way, the speed reducer of the present invention can decrease the stroke of the actuator, which is used to cause the disk brake to be driven, since a disk brake is adopted as the switch brake that switches between braking and non-braking, and thus makes it possible to realize a size reduction in the speed reducer. Furthermore, the speed reducer of the present invention can be easily installed even in a small- to mid-size vehicle that is not especially equipped with a compressed air tank or the like, because an electric linear actuator driven by electrical current as the source of power is used to switch between braking and non-braking.

Furthermore, with the speed reducer of the present invention, since the permanent magnets are fixed to the surface of the magnet support disk, which is integral with the rotational member, as being opposite the principal surface of the brake disk, the manufacture of the permanent magnets can be carried out easily, compared to a configuration in which the permanent magnets are fixed to the outer circumferential surface of a support ring as in conventional speed reducers, and thus a cost reduction can be realized. This is because, although it is necessary to process the permanent magnets used in a conventional speed reducer in a curved surface shape following the outer circumferential surface of the support ring, the permanent magnets used in the speed reducer of the present invention are in the form of plane, which is easy to be processed..

### 2. Configuration of Electric Linear Actuator

An electric linear actuator of a ball screw mechanism or a ball ramp mechanism is commonly used as the electric linear actuator. An electric linear actuator of a ball screw mechanism or ball ramp mechanism converts the rotational motion of the electric motor into linear motion by way of a motion conversion mechanism causing the ball to follow the screw thread having a lead or a sloped cam surface.

However, although the electric linear actuator of a ball screw mechanism or the like has a function of multiplying the driving force of the linear motion to a certain degree, the force multiplying function to quickly stop rotation of the switch brake disk, i.e. the rotational member, may not be able to be sufficiently ensured. The lead angle of the screw or the sloped angle of the cam surface may be reduced to amplify the force multiplying function; however, in case of a ball screw mechanism, the ball diameter becomes small when the lead angle of the screw is reduced, and the load carrying capacity declines. In addition, in case of a ball ramp mechanism, the stroke of the linear motion cannot be sufficiently ensured if the sloped angle of the cam surface is made small.

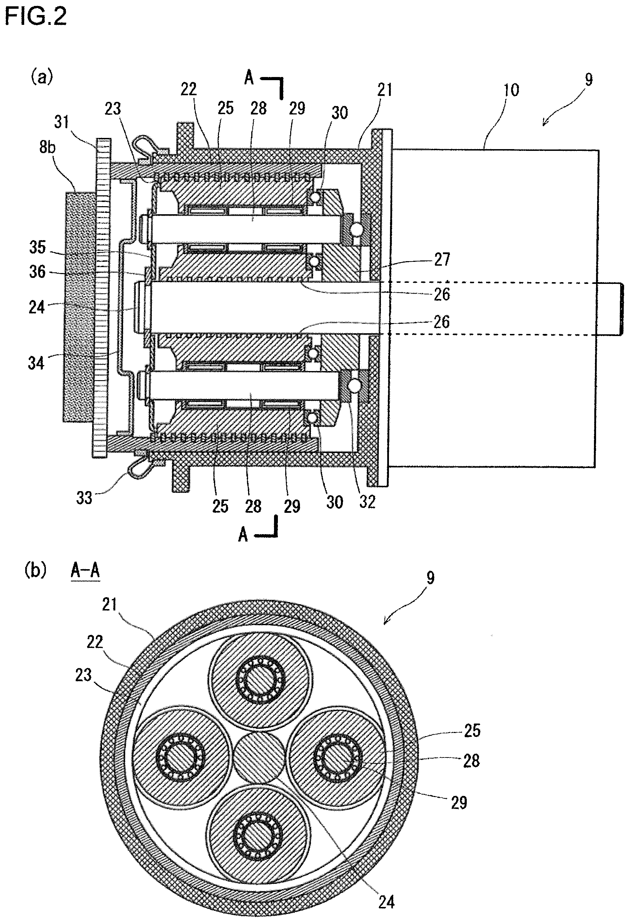

In order to deal with these inadequacies, the speed reducer of the present invention preferably adopts an electric linear actuator that can sufficiently ensure the force multiplying function of the driving force of the linear motion for the switching between the braking and non-braking, for example, an electric linear actuator comprising a planetary roller mechanism as shown in FIG. 2 described below.

FIG. 2 is a figure showing a configuration example of an electric linear actuator in the eddy current speed reducer of the present invention, with FIG. 2(a) showing a longitudinal sectional view and FIG. 2(b) showing cross-sectional view along A-A of FIG. 2(a). For the electric linear actuator 9, the outer body thereof is configured by a cylindrical casing 21, and the electric motor 10 is mounted to a back end thereof.

The casing 21 is fixed to the switch brake caliper 7 shown in FIG. 1. An outer race member 22 of cylindrical shape is inserted into the interior of the casing 21 to be irrotational and slidable in an axial direction. The rotor shaft 24 corresponding to the main shaft of the electric motor 10 is disposed on the central axis thereof. This rotor shaft 24 can be made separately from the main shaft of the electric motor 10 and coupled to the main shaft.

A plurality of planetary rollers 25 of cylindrical shape are disposed between the outer circumferential surface of the rotor shaft 24 and the inner circumferential surface of the outer race member 22. FIG. 2 shows an example in which four planetary rollers 25 are disposed.

The rotor shaft 24, each of the planetary rollers 25 and the outer race member 22 are disposed in pre-strained condition, so to speak, with negative gap in a radial direction, so as to cause a pre-stressed condition in the radial direction. Thus, each of the planetary rollers 25 is configured so as to revolve while rotating around the rotor shaft 24, owing to the rotation of the rotor shaft 24 in association with the output of the electric motor 10. More specifically, a carrier member 27 with a flange is disposed onto and encases the rotor shaft 24 and being positioned behind the planetary rollers 25, and a cover member 35 is likeiwse disposed in front of the planetary rollers 25. A thrust ball bearing 32 is disposed between a back wall of the casing 21 and the carrier member 27, and the carrier member 27 is supported so as to be rotatable around the rotor shaft 24. A C-ring 36 is fitted at a front-end portion of the rotor shaft 24 to contact the cover member 35, and the movement of the carrier member 27, planetary rollers 25 and cover member 35 in an axial direction is restricted by this C-ring 36.

A support shaft 28 is inserted into each of the planetary rollers 25, respectively, and each of the support shafts 28 penetrates the cover member 35 and the flange of the carrier member 27 and is fixed by bolts or the like to the carrier member 27. Each of the planetary rollers 25 is rotatably supported by respective support shafts 28 via needle bearings 29, and also rotatably supported relative to the carrier member 27 by thrust ball bearings 30 disposed between the flange of the carrier member 27 and the planetary rollers 25.

According to such a configuration, when the rotor shaft 24 rotates, each planetary roller 25 is able to revolve while rotating around the rotor shaft 24.

Furthermore, the outer race member 22 is configured so as to move in an axial direction in response to each of the planetary rollers 25 revolving while rotating around the rotor shaft 24. More specifically, a double-threaded spiral groove system is provided at the inner circumferential surface of the outer race member 22 on which each of the planetary rollers 25 rotatingly contacts, and a ridge part of a rectangular cross section is circumferentially disposed on each thread of the spiral groove system. A double-threaded spiral convex zone 23 is formed on the inner circumferential surface of the outer race member 22 by this ridge part. On the other hand, a single-threaded spiral groove system 26 of trapezoidal cross section, which has the same pitch as the spiral convex zone 23 of the outer race member 22 and a lead angle different from that of the spiral convex zone 23, is provided for the outer circumferential surface of each planetary roller 25.

According to such a configuration, the spiral convex zone 23 of the outer race member 22 meshes with the spiral groove system 26 of each planetary roller 25 so that the outer race member 22 moves axially during the stage in which the planetary rollers 25 revolve while taking orbital motion in association with the rotation of the rotor shaft 24, thereby allowing the outer race member 22 to linearly move. At this time, the amount of linear motion of the outer race member 22 relative to the amount of rotation of the rotor shaft 24 is defined according to the difference in lead angle between the spiral groove system 26 and the spiral convex zone 23. As the difference in the lead angle therebetween is reduced, the amount of linear motion of the outer race member 22 decreases, with a result that the reduction rate in the linear motion increases and the driving force of the linear motion can be intensified.

A linear drive member 31 is connected to a front end of the outer race member 22, and a brake pad 8b on the back side shown in FIG. 1 is connected to this linear drive member 31. Linear motion of the outer race member 22 can thereby be transmitted to the linear drive member 31 to cause the brake pad 8b on the back side to be linearly driven toward the switch brake disk 6. At that time, since the outer race member 22 is guided by sliding over the wide range between the inner circumferential surface of the casing 21, it moves in an axial direction with a stable posture, with a result that linear driving of the brake pad 8b on the back side can be performed smoothly.

It should be noted that, for the outer circumferential surface of each of the planetary rollers 25, and the inner circumferential surface of the outer race member 22 and the outer circumferential surface of the rotor shaft 24 contacted by each of the planetary rollers 25, a surface hardening process is applied in order to ensure abrasion resistance, and lubricating grease is filled onto these contact surfaces. Similarly, a surface hardening process is also applied on the outer circumferential surface of the outer race member 22 and the inner circumferential surface of the casing 21 which slidably contact each other, and lubricating grease is filled either. In addition, the inside of the casing 21 is sealed by a flexible boot 33 and installed between the front end of the casing 21 and the outer circumference of a front-end portion of the outer race member 22, and is sealed by a membranous seal 34 installed on the interior of the front-end portion of the outer race member 22.

With the electric linear actuator 9 shown in FIG. 2, the spiral convex zone 23 of the outer race member 22 is double-threaded and the spiral groove system 26 of the planetary roller 25 is single-threaded; however, this is because the degree of freedom of setting of the difference in lead angles between the both can be expanded by designing the spiral convex zone 23 to be multiple-threaded. However, the number of threading can be arbitrarily set according to the difference in lead angle to be set for the two, so long as the pitches of the two are the same and the two mesh with each other.

In addition, although, in the electric linear actuator 9 shown in FIG. 2, the spiral groove system 26 is provided on the outer circumferential surface of the planetary rollers 25, a circumferential groove system having the same pitch as the spiral convex zone 23 and meshing therewith may be substituted instead of the spiral groove system26.

### 3. Configuration Mitigating Shock caused by Switch Brake

In the speed reducer of the present invention, as described above, a disk brake employing the actuator comprising the planetary roller mechanism is adopted as the switch brake to switch between braking and non-braking, and a function of quickly switching from a non-braking state to a braking state is required for this switch brake in order to generate a braking force as an auxiliary brake with superior responsiveness. Due to this requirement, being different from such as a disk brake used in a main brake that causes the rotation of a tire to stop in several seconds without immediately locking up the rotation of the tire, the switch brake powerfully sandwiches the switch brake disk with brake pads to cause the rotation of the rotational member to stop in a moment on the order of 1 second at the longest.

In this case, since the rotation of the rotational member rapidly declines as a result of switching from non-braking to braking, an excessive shock is easily imparted to the switch brake caliper by the inertial force of the rotational member, particularly at the moment at which the rotational member stops. This shock is also imparted to the bracket supporting the switch brake caliper and further to irrotational portions of the vehicle supporting the bracket, and may come to be a hindrance to durability.

As a result, in the speed reducer of the present invention, it is preferable to take measures to mitigate the shock caused by the switch brake. Hereinafter, structural measures and control measures that can be applied to the speed reducer of the present invention will be explained in order.

### 3-1. Shock Mitigation Structural Measures

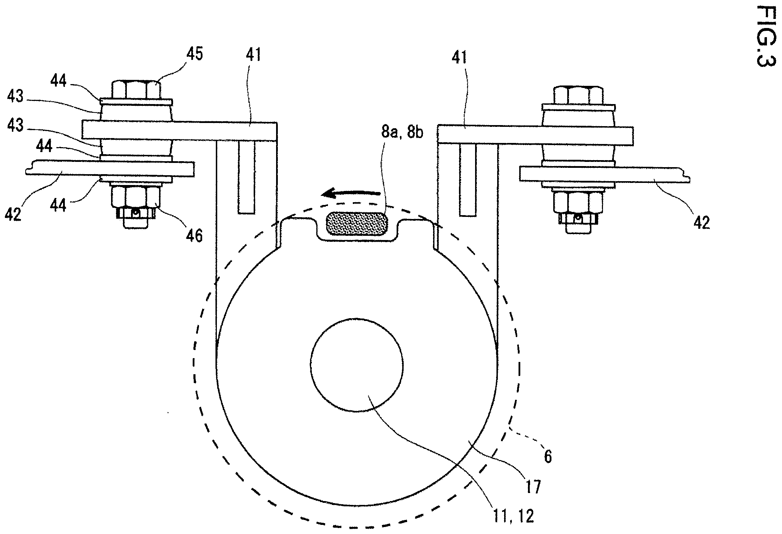

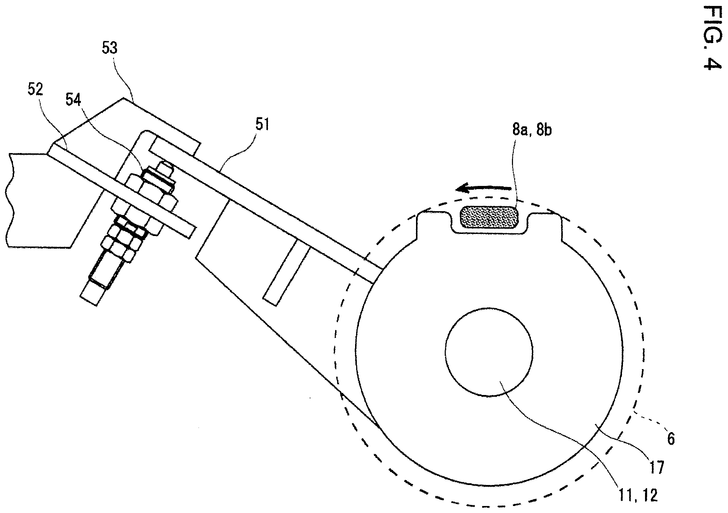

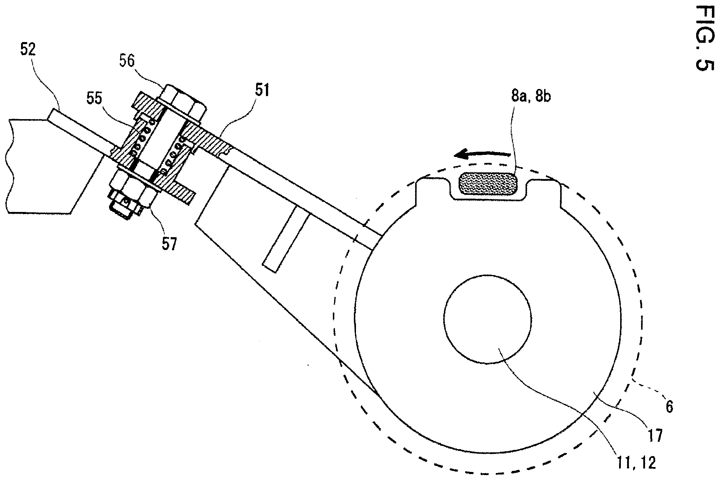

FIG. 3 is a schematic diagram showing an example of structural mitigation measures against a shock by the switch brake. In the same figure, the brake pads 8a, 8b of the switch brake caliper are displayed in a state in which the speed reducer is axially viewed from the front, the switch brake disk 6 of the rotational member (stator) being shown by a dotted line in the spatial relationship with these brake pads 8a, 8b, and the direction of rotation thereof being shown by the arrow. These are similarly shown also in FIG. 4 and FIG. 5 described later.

As shown in FIG. 3, in the bracket 17 supporting the switch brake caliper as well as the brake pads 8a, 8b, arm portions 41 project from left and right side portions, respectively. Each of the arm portions 41 is fixed to a cross member 42 integral with the vehicle chassis by fastening by means of bolts 45 and nuts 46 via a shock mount bushing 43 and a metal washer 44. The shock mount bushing 43 is made of an elastic material such as rubber or urethane.

According to the configuration shown in FIG. 3, a shock that occurs as a result of the stopping of the switch brake disk 6 (rotational member) during braking can be absorbed and thus mitigated by elastic deformation of the shock mount bushing 43.

FIG. 4 is a schematic diagram showing another example of a structural mitigation measure against a shock by the switch brake, and FIG. 5 is a schematic diagram showing yet another example thereof. As shown in FIG. 4 and FIG. 5, in the bracket 17, an arm portion 51 singly projects from either of left and right side portions. The arm portion 51 is fixed to a stay 52 provided for the vehicle chassis.

With the configuration shown in FIG. 4, a shock absorber 54 with a return function is mounted to the stay 52, and the arm portion 51 abuts a leading end of the shock absorber 54 thereof and is contacted to and supported by a projecting piece 53 of a hook shape that projects from the stay 52. An absorber of orifice type or an absorber of silicon rubber built-in type can be adopted for the shock absorber 54.

With the configuration shown in FIG. 5, the arm portion 51 is fixed to the stay 52 by fastening by means of a bolt 56 and a nut 57, while a coil spring 55 is disposed between the arm 51 and the stay 52.

According to the configurations shown in FIG. 4 and FIG. 5, the shock occurring due to the stopping of the switch brake disk 6 (rotational member) during braking can be absorbed and thus mitigated by the shock absorber 54 and the coil spring 55.

### 3-2. Shock Mitigation Control Measures

In order to mitigate the shock occurring from the stopping of the rotational member (stator) by the switch brake, it is effective to relax the sudden decline in the rotational speed of the rotational member immediately before the stop of the rotational member and suppress the change of rotational speed with time. This can be realized by controlling the electrical current applied to the electric motor. The method of electrical current control of this electric motor differs somewhat depending on whether or not the electric linear actuator has a thrust holding function.

During the braking, the actuator is operated by applying electrical current to the electric motor, the brake pads are advanced by the linear motion, and thereby a pressing force is generated on the switch brake disk. The thrust holding function of the actuator is a function to maintain the positions of the brake pads and hold the pressing force thus generated when the electrical current application is discontinued. If there is the thrust holding function, the brake pads are linearly moved in the opposite direction and retracted by applying opposite electrical current, positive or negative, to the electric motor, whereby the pressing force is released. If there is not the thrust holding function, the brake pads are spontaneously retracted by the counterforce of the pressing force when the electric current to the electric motor is discontinued, whereby the pressing force is released.

In case of the actuator comprising the planetary roller mechanism shown in FIG. 2, for example, the thrust holding function of the actuator exhibits when the difference between the lead angles of the spiral groove system 26 and the spiral convex zone 23 is set to be small at no more than 0.3° in order to multiply the driving force of the linear motion. Hereinafter, the shock mitigation control measures of the electric motor will be explained for the case where the actuator has the thrust holding function and the case without it.

### (1) Case Where Actuator has Thrust Holding Function

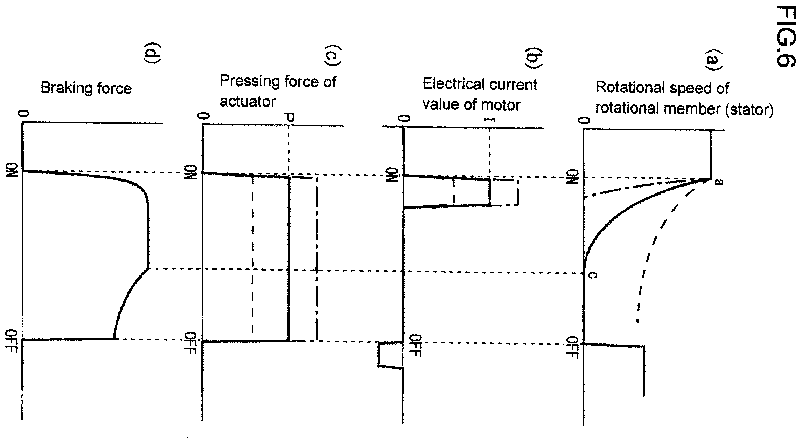

FIG. 6 is a time chart illustrating an example of a mitigation measure in control against a shock caused by the switch brake in case the actuator has a thrust holding function, with (a) of the same figure showing the rotational speed of the rotational member (stator), (b) of the same figure showing the value of the applied electrical current to the electric motor, (c) of the same figure showing the pressing force of the actuator, and (d) of the same figure showing the braking force.

As shown by a point "a" in FIG. 6(a), when the rotational member (stator) switches from the non-braking state where it rotates about the rotational shaft of the vehicle and the brake disk (rotor) to the braking state, an electrical current is applied to the electric motor at a predetermined electrical current value I, as shown by the solid line in FIG. 6(b). At this time, an electrical current value I that is suitably applied to the electric motor is set according to the rotational speed of the rotational member at the time that the braking is switched. The actuator thereby operates and the brake pads advance, whereby a pressing force of the actuator is generated against the switch brake disk, as shown by the solid line in FIG. 6(c). As a result of this, the rotational speed of the rotational member declines as shown by the solid line in FIG. 6(a), and a difference in the rotational speed simultaneously occurs between the brake disk and the rotational member. Thus, a braking force generates at the brake disk, as shown in FIG. 6(d).

It should be noted that, with the actuator shown in FIG.2, the pressing force of the actuator can be monitored by arranging a load sensor between the back-end wall of the casing 21 and the thrust ball bearing 32, for example.

After the pressing force has reached a predetermined pressing force P, the application of electrical current to the electric motor stops as shown by the solid line in FIG. 6(b). At this time, since the actuator has a thrust holding function, the pressing force of the actuator is maintained in the same state, as shown by the solid line in FIG. 6(c). As a result of this, the rotational speed of the rotational member further declines as shown by the solid line in FIG. 6(a), and eventually the rotational member stops as shown by point "c" in FIG. 6(a). Braking force is continually generated at the brake disk by the difference in the rotational speed between the rotational member thus stopped and the brake disc.

When switching from this state to non-braking, reverse electrical current, which is opposite to the electrical current applied to the electric motor during the braking, is applied as shown in FIG. 6(b). The actuator thereby operates and the brake pads retract, whereby the pressing force of the actuator is released as shown in FIG. 6(c) and the non-braking state is entered.

At the time of such switch of the braking, it is important to suitably set the electrical current value applied to the electric motor, in order to responsively perform switching and mitigate the shock occurring as a result of the stopping of the rotational member.

For example, in case of the electrical current value applied to the electric motor being set relatively low as shown by the dashed line in FIG. 6(b), the pressing force of the actuator becomes insufficient as shown by the dashed line in FIG. 6(c). In this case, a change in the rate of rotational decline of the rotational member becomes relaxed as shown by the dashed line in FIG. 6(a), and the rotational member cannot be made to stop in a short time.

In addition, in case of the electrical current value applied to the electric motor being set relatively high as shown by the dashed-dotted line in FIG. 6(b), the pressing force of the actuator increases excessively, as shown by the dashed-dotted line in FIG. 6(c). In this case, the change in the rate of rotational decline of the rotational member increases as shown by the dashed-dotted lined in FIG. 6(a), and the rotational member can be made to stop in an extremely short time. However, the shock becomes significant due to the backlash thereof.

In contrast to these cases, in case of setting the electrical current to be applied to the electric motor to a suitable electrical current value I as shown by the solid line in FIG. 6(b), the pressing force of the actuator becomes the appropriate pressing force P as shown by the solid line in FIG. 6(c). In this case, the rotational speed of the rotational member rapidly declines, and then the change in the rate of rotational decline of the rotational member becomes moderate immediately before the rotational member stops, as shown by the solid line in FIG. 6(a). Switching can thereby be performed responsively, and shock occurring as a result of stopping of the rotational member can be mitigated.

Herein, a pressing force of the actuator, which is able to rapidly decrease the rotational speed of the rotational member, and also relax the change in the rate of rotational decline of the rotational member immediately before the rotational member stops, depends on the rotational speed of the rotational member at the time that the braking is switched. As a result, upon setting an electrical current value suitably applied to the electric motor, it is necessary to ascertain the pressing force that is suitable for every rotational speed of the rotational member at the time that the braking is switched.

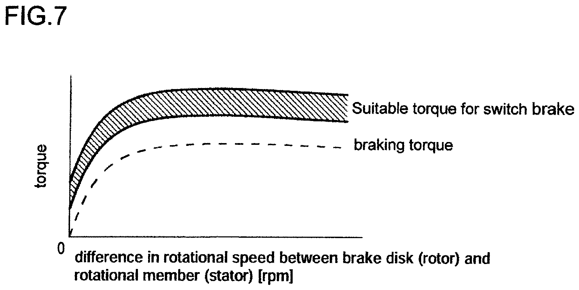

FIG. 7 is a schematic diagram showing a relationship between torque and the difference in rotational speed between the brake disk and the rotational member, in order to ascertain the suitable pressing force of the actuator. The difference in rotational speed between the brake disk (rotor) and the rotational member (stator) shown in the same figure also corresponds to the rotational speed of the rotational member at the time that the braking is switched. As shown by the dashed line in the same figure, the braking torque based on the braking force generated at the brake disk increases according as the difference in relative rotational speed between the brake disk and the rotational member becomes larger, and the braking torque saturates and becomes substantially constant when the difference in rotational speed thereof becomes larger to a certain degree.

When the rotational member is made to stop, at least a torque exceeding the braking torque is required for the switch brake torque generated by the pressing force of the actuator, and furthermore, a torque to which the inertia torque based on the inertia force occurring due to the rotational speed of the rotational member at the time that the braking is switched is added is required. However, if the switch brake torque is too large, an excessive shock will occur due to the stopping of the rotational member.

Based on these aspects, the switch brake torque is preferably set to within the range of 120% to 150% based on the braking torque occurring in accordance with the rotational speed of the rotational member at the time that the braking is switched, as shown by the hatched area in FIG. 7. Therefore, the suitable pressing force of the actuator causes a switch brake torque within the range to be generated, and the electrical current value applied to the electric motor is set according to the pressing force.

### (2) In Case Actuator does not have Thrust Holding Function

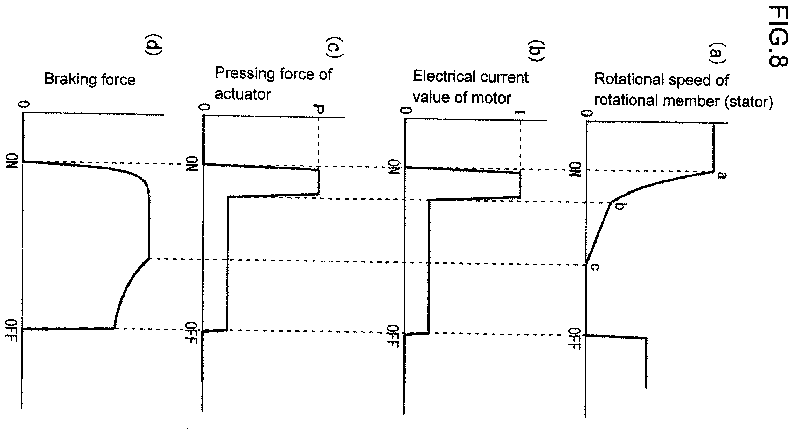

FIG. 8 is a time chart illustrating an example of a mitigation control measure against a shock generated by the switch brake in case the actuator does not have a thrust holding function, with (a) of the same figure showing the rotational speed of the rotational member (stator), (b) of the same figure showing the value of the electrical current applied to the electric motor, (c) of the same figure showing the pressing force of the actuator, and (d) of the same figure showing the braking force.

Control measures in case the actuator does not have a thrust holding function differ in the followings points from the case where the actuator has the thrust holding function as described above.

Electrical current at a predetermined electrical current value I is applied to the electric motor at the point "a" shown in FIG. 8(a), and then when a predetermined time elapses as shown by the point "b" in the same figure, the electrical current value applied to the electric motor is reduced, as shown in FIG. 8(b). The pressing force of the actuator thereby declines as shown in FIG. 8(c), since the actuator does not have the thrust holding function. As a result of this, the change in the rate of rotational decline of the rotational member becomes relaxed as shown in FIG. 8(a), and the rotational member stops at the point "c" in the same figure.

Thus, the rotational speed of the rotational member rapidly declines, and then the change in the rate of rotational decline of the rotational member becomes relaxed immediately before the rotational member stops; therefore, switching can be performed responsively, and shock occurring as a result of stopping of the rotational member can be mitigated. In case of the control shown in FIG. 8, the applied electrical current value I when the braking is switched can be set to be larger than the case of the control shown in FIG. 7.

Instead of the elapsed time, at the time that the rotational speed of the rotational member is reduced to a predetermined rotational speed, the reduction of the electrical current value, which is applied to the electric motor, at the point "b" shown in FIG. 8(a) may be performed.

In case the actuator does not have a thrust holding function, and when the application of electrical current to the electric motor stops as shown in FIG. 8(b), the pressing force of the actuator is released and the non-braking state is immediately entered; therefore, the application of electrical current to the electrical motor continues during braking, even after the rotational member has stopped.

### [INDUSTRIAL APPLICABILITY]

According to the eddy current speed reducer of the present invention, a size reduction in the device can be realized, and further, it can be easily installed even in a small- to mid-size vehicle that is not specially equipped with a compressed air tank or the like. Therefore, the eddy current speed reducer of the present invention is very useful as an auxiliary brake of any vehicle.

**[REFERENCE SIGNS LIST]**

| | | |
|---|---|---|
| 1: Brake disk, | 2: Radiator fin, | 3: Rotational member, |
| 4: Magnet support disk, | 5: Permanent magnet, | |
| 6: Switch brake disk, | 7: Switch brake caliper, | |
| 8a, 8b: Brake pads, | 9: Electric linear actuator, | |
| 10: Electric motor, | 11: Rotation shaft, | 12: Connecting shaft, |
| 13: Sleeve, | 14: Nut, | 15a, 15b: Bearings, |
| 16a, 16b: Seal members, | 17: Bracket, | |
| 18: Bearing, | 19a, 19b: Seal members, | |
| 21: Casing, | 22: Outer race member, | 23: Spiral convex zone, |
| 24: Rotor shaft, | 25: Planetary roller, | 26: Spiral groove system, |
| 27: Carrier member, | 28: Support shaft, | 29: Needle bearing, |
| 30: Thrust ball bearing, | 31: Linear drive member, | |
| 32: Thrust ball bearing, | 33: Boot, | 34: Membranous seal, |
| 35: Cover member, | 36: C-ring, | 41: Arm portion, |
| 42: Cross member, | 43: Shock mount bushing, | |
| 44: Metal washer, | 45: Bolt, | 46: Nut, |
| 51: Arm portion, | 52: Stay, | 53: Projecting piece, |
| 54: Shock absorber, | 55: Coil spring, | |
| 56: Bolt, | 57: Nut | |

## Claims

1. An eddy current speed reducer which includes:
a brake disk that is fixed to a rotation shaft of a vehicle;
permanent magnets that are disposed not only oppositely relative to a principal surface of the brake disk but also circumferentially in such a manner that each magnet is magnetized in reverse polarity to adjacent ones;
a rotational member that retains the permanent magnets, has a switch brake disk, and is rotatably supported by the rotation shaft;
a switch brake caliper that has brake pads sandwiching the switch brake disk therebetween, and is fixed to an irrotational portion of the vehicle; and
an electric linear actuator that causes the brake pads to be linearly driven by converting rotational motion of an electric motor into linear motion,
the speed reducer being **characterized in that**:
the electric linear actuator is configured such that a plurality of planetary rollers are interposed between an outer circumferential surface of a rotor shaft, which rotates integrally with a main shaft of the electric motor, and an inner circumferential surface of an outer race member that concentrically surrounds the rotor shaft, and each of the planetary rollers revolves while rotating around the rotor shaft as a result of the rotation of the rotor shaft;
while allowing a spiral convex zone to be disposed on the inner circumferential surface of the outer race member, provided on an outer circumferential surface of each of the planetary rollers is a circumferential groove system, which has the same pitch as the spiral convex zone and meshes with the spiral convex zone, or a spiral groove system, which has the same pitch as the spiral convex zone and a lead angle different from that of the spiral convex zone and meshes with the spiral convex zone; and
the outer race member moves in an axial direction in response to revolving and orbital motion of each of the planetary rollers as a result of the rotation of the rotor shaft to thereby cause the brake pads to be linearly driven as a result of the axial movement of the outer race member.

2. The eddy current speed reducer according to claim 1, **characterized in that** the switch brake caliper is fixed to the irrotational portion of the vehicle via a buffering material.

## Patentansprüche

1. Wirbelstrom-Geschwindigkeitsreduzierer, umfassend:
eine Bremsscheibe, die an einer Rotationswelle eines Fahrzeugs angebracht ist;
Permanentmagnete, die nicht nur relativ gegenüber einer Hauptfläche der Bremsscheibe angeordnet sind, sondern auch derart in Umfangsrichtung angeordnet sind, dass jeder Magnet in umgekehrter Polarität zu den benachbarten magnetisiert ist;
ein Rotationelement, das die Permanentmagnete hält, weist eine Schaltbremsscheibe auf und ist durch die Rotationswelle drehbar gestützt;
einen Schaltbremssattel, der Bremsbelägen aufweist, die die Schaltbremsscheibe zwischen ihnen aufnehmen, und der an einem drehfesten Abschnitt des Fahrzeugs angebracht ist; und
einen elektrischen Linearaktuator, der die Bremsbeläge veranlasst, durch Wandeln einer Rotationsbewegung eines elektrischen Motors in eine Linearbewegung linear angetrieben zu werden,
der Geschwindigkeitsreduzierer ist **dadurch gekennzeichnet, dass**;
der elektrische Linearaktuator derart eingerichtet ist, dass eine Mehrzahl an Planetenrollen zwischen einer äußeren Umfangsfläche einer Rotorwelle, die integral mit einer Hauptwelle des elektrischen Motors rotiert, und einer inneren Umfangsfläche eines äußeren Laufelements, das die Rotorwelle konzentrisch umgrenzt, liegen, und sich jede der Planetenrollen während des Drehens um die Rotorwelle als eine Folge der Drehung um die Rotorwelle dreht;
während es einer spiralartigen konvexen Zone ermöglicht wird, auf der inneren Umfangsfläche des äußeren Laufelements angeordnet zu sein, auf einer äußeren Umfangsfläche von jeder der Planetenrollen ein umfängliches Rillensystem, das das gleiche Abstandsmaß wie die spiralartige konvexe Zone aufweist und mit der spiralartigen konvexen Zone ineinander greift, oder ein spiralartiges Rillensystem vorgesehen ist, das das gleiche Abstandsmaß wie die spiralartige konvexe Zone und einen Steigungswinkel aufweist, der unterschiedlich zu dem der spiralartigen konvexen Zone ist, und mit der spiralartigen konvexen Zone ineinandergreift; und
das äußere Laufelement sich als Reaktion auf eine Umlauf- und Orbitalbewegung von jeder der Planetenrollen als Folge der Rotation der Rotorwelle in einer axialen Richtung bewegt, wodurch die Bremsbeläge als Folge der axialen Bewegung des äußeren Laufelements linear angetrieben werden.

2. Wirbelstrom-Geschwindigkeitsreduzierer nach Anspruch 1, **dadurch gekennzeichnet, dass** der Schaltbremssattel auf dem drehfesten Abschnitt des Fahrzeugs über ein Puffermaterial angebracht ist.

## Revendications

1. Réducteur de vitesse à courant de Foucault qui inclut :
un disque de frein qui est relié à un arbre rotatif d'un véhicule ;
des aimants permanents disposés non seulement de manière opposée par rapport à une surface principale du disque de frein mais également de manière circonférentielle de sorte que chaque aimant est magnétisé en polarité inverse par rapport aux aimants adjacents ;
un membre rotatif qui maintient les aimants permanents, ayant un commutateur de disque de frein, et est supporté de manière rotative par l'arbre de rotation,
un commutateur d'étrier de frein ayant des plaquettes de frein prenant en sandwich le commutateur de disque de frein, et étant relié à une portion non-rotative du véhicule, et
un actionneur électrique linéaire entraine les plaquettes de frein linéairement en convertissant le mouvement rotationnel du moteur électrique en un mouvement linéaire,
le réducteur de vitesse à courant de Foucault étant **caractérisé en ce que** :
l'actionneur électrique linéaire est configuré de manière qu'une pluralité de rouleaux satellites sont interposés entre une surface circonférentielle externe d'un arbre de rotor, qui tourne intégralement avec un arbre principal du moteur électrique, et une surface circonférentielle interne d'un élément de course externe qui entoure concentriquement l'arbre de rotor, et chacun des rouleaux satellites gravite tout en tournant autour de l'arbre de rotor du fait de la rotation de l'arbre de rotor;
tout en permettant à une zone convexe en spirale d'être disposée sur la surface circonférentielle interne de l'élément de course externe, un système de rainure circonférentielle étant disposé sur une surface circonférentielle externe de chacun des rouleaux satellites, ayant le même pas que la zone convexe en spirale et s'entremêlant avec la zone convexe, ou un système de rainure spirale ayant le même pas que la zone convexe en spirale et un angle d'inclinaison différent de celui de la zone convexe en spirale et s'entremêle avec la zone convexe en spirale; et
l'élément de course externe se déplace selon une direction axiale en réponse au mouvement gravitationnel et orbital de chacun des rouleaux satellites du fait de la rotation l'arbre de rotor provoquant le mouvement linéaire des plaquettes de frein entrainées par le mouvement axial de l'élément de course externe.

2. Réducteur de vitesse à courant de Foucault selon la revendication 1, **caractérisé en ce que** le commutateur d'étrier de frein est fixé à la portion non-rotative du véhicule via un matériau tampon.
